# EUROPEAN PATENT APPLICATION

(11) **EP 4 096 363 A1**
(43) Date of publication of application: **30.11.2022**
(21) Application number: 22176074.7
(22) Date of filing: 30.05.2022
(51) Int. Cl.: H05B 6/12, F24C 7/06, F24C 15/10

(54) **ELECTRIC RANGE**

(30) Priority: 28.05.2021 KR 20210069396
(71) Applicant: LG Electronics Inc., SEOUL 07336 (KR)
(72) Inventor: PARK, Myoeng Soo, 08592 Seoul (KR)
(74) Representative: Vossius & Partner Patentanwälte Rechtsanwälte mbB

(57) **Abstract**

An electric range is provided, in which a portion of a bracket, which is configured to support at least one heating unit, is bent downward. More specifically, the at least one heating unit may be mounted in a specific region on the bracket, and a recessed portion which is downwardly formed may be formed in a portion of the specific region. Accordingly, an electric wire disposed between the at least one heating unit and the bracket may be accommodated or disposed in the recessed portion, so that interference between the electric wire disposed between the at least one heating unit and the bracket and the at least one heating unit may be prevented.

## Description

An electric range is disclosed herein.

Various types of cooking appliances are used to heat food or other items (hereinafter, collectively "food") at homes or restaurants. The cooking appliances include gas ranges using gas and electric ranges using electricity.

Electric range are mainly divided into electric ranges using a resistance heating method and electric ranges using an induction heating method. In the resistance heating method, electric current is applied to a metallic resistance wire or a non-metallic heat generation element, such as silicon carbide, to generate heat, and the generated heat is radiated or conducted to heat an object to be heated, for example, a cooking vessel, such as a pot or a frying pan.

In the induction heating method, high-frequency power is applied to a coil to generate a magnetic field around the coil, and an eddy current generated in the generated magnetic field is used to heat an object to be heated made of a metallic material.

Referring to the basic heating principle of the induction heating method, when electric current is applied to a working coil or a heating coil, heat is generated while an object to be heated is inductively heated, and the object to be heated is heated by the generated heat.

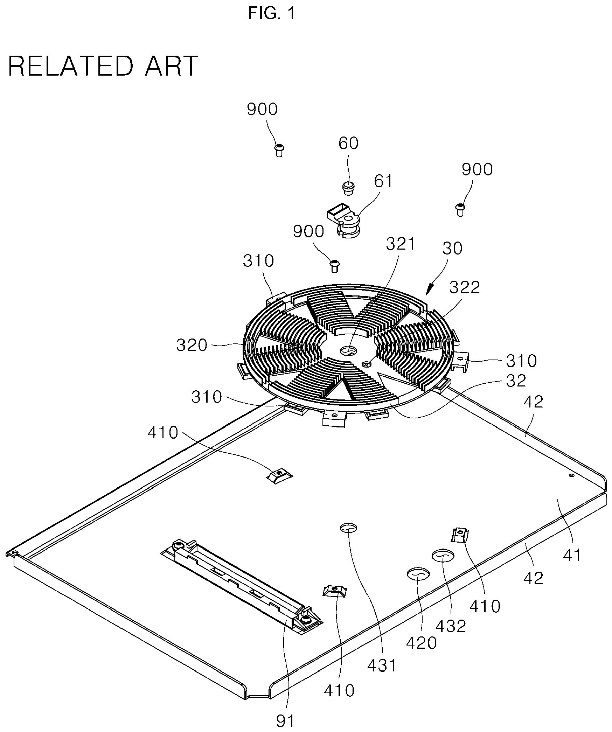

FIG. 1 is a perspective view of a heating unit of a conventional induction heating-type electric range. Referring to FIG. 1, a heating unit 30 includes a core frame 32, and a working coil is spirally wound on an upper surface of the core frame 32. A mounting hole 321 is formed at a central portion of the core frame 32, and a sensor bracket 61, in which a temperature sensor 60 is mounted, is inserted into the mounting hole 321.

An upper plate 41 supports the heating unit 30. The heating unit 30 is mounted on an upper surface of the upper plate 41 by being brought into close contact therewith.

The temperature sensor 60 is installed to measure a temperature of the heating unit 30 while the electric range is driven. One side of an electric wire is attached to the temperature sensor 60, and the other side thereof is electrically connected to a printed circuit board installed below the upper plate 41.

A portion of the electric wire connecting the temperature sensor 60 and the printed circuit board is disposed between the heating unit 30 and the upper plate 41. The portion of the electric wire is disposed in a partially empty space of the heating unit 30. A manufacturer of the electric range places the portion of the electric wire in the space of the heating unit 30, and then mounts the heating unit 30 on the upper plate 41.

However, when the heating unit 30 is mounted, the portion of the electric wire may be withdrawn from the space, and the portion of the electric wire may be disposed on a close contact portion between the heating unit 30 and the upper plate 41. That is, the portion of the electric wire interferes with the heating unit 30 and the upper plate 41.

In this case, pressure may be applied to the portion of the electric wire due to a weight of the heating unit 30, for example, and the electric wire may be disconnected. When the electric wire is disconnected, the electric range may not function normally, and an operation error may occur. In addition, when the electric wire is disconnected, a fire accident may occur.

### BRIEF DESCRIPTION OF THE DRAWINGS

Embodiments will be described in detail with reference to the following drawings in which like reference numerals refer to like elements, and wherein:
FIG. 1 is a perspective view of a heating unit of a conventional induction heating-type electric range;
FIG. 2 is a perspective view of an electric range according to an embodiment;
FIG. 3 is a perspective view, in which some components are omitted, of the electric range according to an embodiment;
FIG. 4 is an exploded perspective view of the electric range according to an embodiment;
FIG. 5 is a perspective view of some components of the electric range according to an embodiment;
FIG. 6 is a perspective view of a heating unit and an upper bracket viewed from above, according to an embodiment;
FIG. 7 is a perspective view of the heating unit and the upper bracket viewed from below, according to an embodiment;
FIG. 8 is a plan view of the upper bracket according to an embodiment;
FIG. 9 is a cross-sectional view, taken along line IX-IX' in FIG. 8; and
FIG. 10 is a perspective view related to the heating unit being mounted on the upper bracket, according to an embodiment.

Embodiments will be described below with reference to the accompanying drawings to allow one of ordinary skill in the art to easily execute the present invention. When it is determined that descriptions of related well-known functions unnecessarily obscure the gist during the description of embodiments, the descriptions will be omitted. Hereinafter, exemplary embodiments will be described with reference to the accompanying drawings. Throughout the drawings, like reference numerals refer to like or similar components.

Although the terms first, and second, for example, are used to describe various components, these components are not substantially limited by these terms. It should be understood that these terms are only used to distinguish one component from another component, but unless otherwise indicated, a first component may be termed a second component.

Unless otherwise stated, each component may be singular or plural throughout the specification.

Singular expressions used in the present specification include plural expressions unless the context clearly indicates otherwise. In the present specification, terms such as "including" or "comprising" should not be construed as necessarily including all of the various components, or various operations described in the present specification, and terms such as "including" or "comprising" should be construed as not including some elements or some operations or further including additional components or operations.

Throughout the specification, unless otherwise stated, "A and/or B" means A, B, or both. Unless otherwise stated, "C to D" means "C or more and D or less."

Throughout the specification, the term "vertical direction" refers to a vertical direction of an electric range in a state in which the electric range is installed to be normally used. The term "leftward and rightward direction" refers to a direction perpendicular to the vertical direction, and the term "frontward and rearward direction" refers to a direction perpendicular to both the vertical direction and the leftward and rightward direction. The terms "both sides direction" or "side direction" may have the same meaning as the leftward and rightward direction, and these terms "may be interchangeably used herein.

Further, in a coordinate axis illustrated in the drawings, x-axis and -x-axis directions are respectively expressed as forward and backward, and y-axis and -y-axis directions are respectively expressed as rightward and leftward directions, and z-axis and -z-axis directions are respectively expressed as upward and downward.

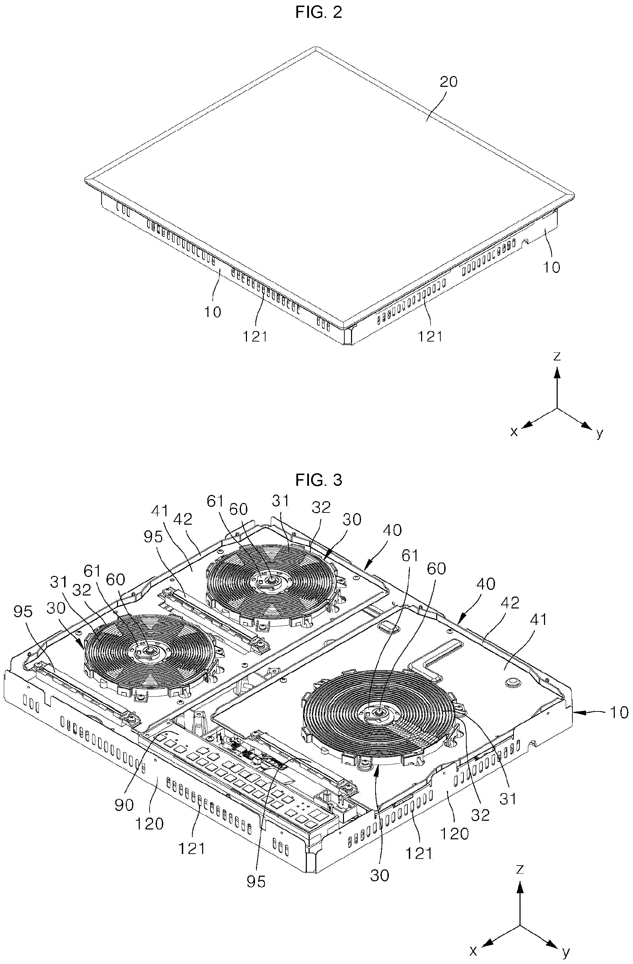

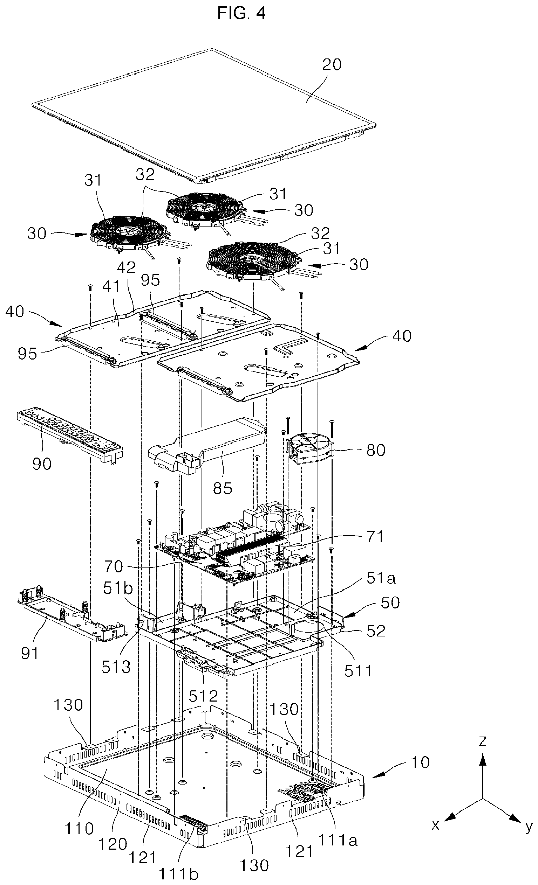

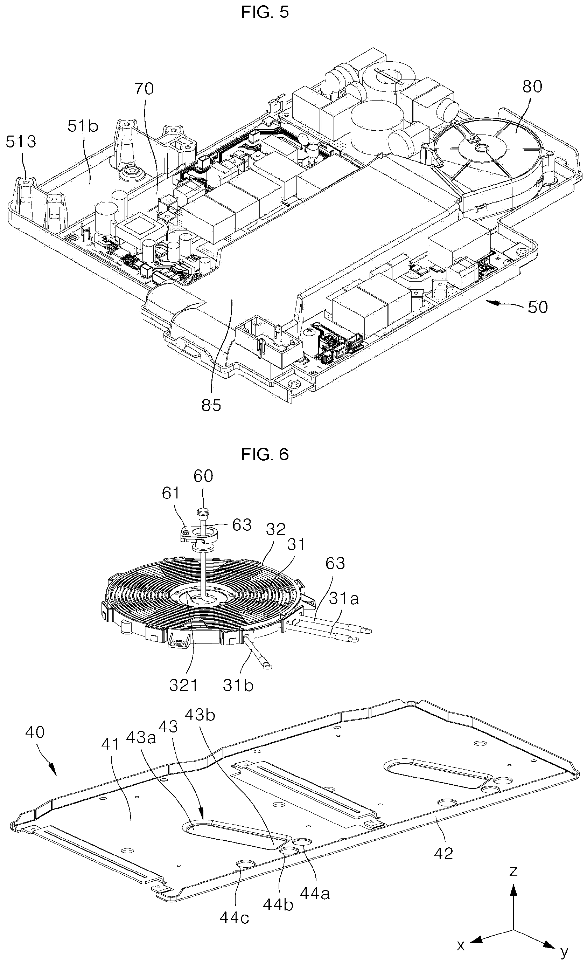

FIG. 2 is a perspective view of an electric range according to an embodiment. FIG. 3 is a perspective view, in which some components are omitted, of the electric range according to an embodiment. FIG. 4 is an exploded perspective view of the electric range according to an embodiment. FIG. 5 is a perspective view of some components of the electric range according to an embodiment.

Referring to FIGS. 2 to 5, an electric range according to an embodiment may heat an object to be heated by an induction heating method. In this case, the object to be heated may be a cooking vessel including a metal material, such as, for example, stainless steel, or iron, for example.

The induction heating method is a method of applying high-frequency power to a working coil 31 to generate a magnetic field around the working coil 31 and heating an object to be heated made of a metallic material using an eddy current generated due to the magnetic field.

That is, the magnetic field is generated around the working coil 31 by applying high-frequency power to a heating unit (heater) 30 having a structure in which the working coil 31 is adjacent to a ferrite core. When the object to be heated is placed in a region in which the magnetic field is generated, an eddy current is induced in the object to be heated due to the magnetic field, and Joule's heat is generated due to the eddy current to heat the object to be heated. As the object to be heated is heated, food placed in the object to be heated may be heated.

The electric range according to an embodiment may include a case 10, a cover plate 20, the heating unit 30, an upper bracket 40, and a base bracket 50. The case 10 may protect components forming the electric range. For example, the case 10 may be made of an aluminum material; however embodiments are not limited thereto. The case 10 may be thermally insulated in order to suppress heat generated by the working coil 31 from being emitted to the outside.

Components forming the electric range such as the heating unit 30, the upper bracket 40, and a control board 90, for example, may be accommodated in the case 10. An upper portion of the case 10 may be open, and the open portion may be closed by the cover plate 20. The case 10 may be formed in a box shape by entirely processing a plate-shaped material.

The case 10 may include a first casing 110, a second casing 120, and a third casing 130. The first casing 110 may form a bottom surface of the case 10. The first casing 110 may support the above-described installed components of the electric range.

One or more ventilators 111a and 111b may be provided in the first casing 110. The one or more ventilators 111a and 111b may allow air to flow in order to smoothly cool a printed circuit board 70 provided inside of the first casing 110 and circuit elements or electronic elements mounted on the printed circuit board 70.

The second casing 120 may be bent from the first casing 110 and may form a side surface of the case 10. The second casing 120 may be bent in a vertical direction from an edge of the first casing 110 and may be a side wall of the electric range.

The second casing 120 may be disposed at each side of the first casing 110 formed in a substantially quadrangular shape. The second casing 120 may reinforce a rigidity of the entire case 10. That is, the second casing 120 may be bent from the first casing 110 in order to inhibit the plate-shaped first casing 110 from being bent or damaged due to a weight of the installed components or external force.

The second casing 120 may include a plurality of discharge holes 121. The discharge holes 121 allow an interior and an exterior of the case 10 to communicate with each other. Accordingly, air may flow through the discharge holes 121, and the components accommodated in the case 10 may be cooled.

The third casing 130 may be bent from a portion of the second casing 120. The third casing 130 may support the upper bracket 40 together with a boss unit (boss) 513 described hereinafter. The third casing 130 may be disposed on at least some sides of the first casing 110.

The first upper plate 41 that forms a bottom surface of the upper bracket 40 may be seated on an upper surface of the third casing 130. The first upper plate 41 and the third casing 130 may be coupled to each other by a coupling mechanism, such as a bolt.

The cover plate 20 may be coupled to an upper end of the case 10, and an object to be heated may be disposed on an upper surface of the cover plate 20. The cover plate 20 may close an open upper portion of the case 10 to protect components accommodated in the case 10.

An object to be heated may be placed on the upper surface of the cover plate 20, and a magnetic field generated in the heating unit 30 may pass through the cover plate 20 and reach the object to be heated. The cover plate 20 may be made of a material including, for example, ceramic; however, embodiments are not limited thereto.

An input interface configured to receive an input from a user may be installed on the upper surface of the cover plate 20. The input interface may be installed in a specific region on the upper surface of the cover plate 20 and may display a specific image.

The input interface may receive a touch input from the user, and the electric range may be operated on the basis of the received touch input. For example, the input interface may be a module for inputting a desired heating strength or time, for example, by the user, and may be implemented as a physical button, or a touch panel, for example. For example, the input interface may be a thin film transistor-liquid crystal display (TFT-LCD; however, embodiments are not limited thereto.

The control board 90 configured to input an operation command to the electric range may be provided below the cover plate 20. The control board 90 may be provided with a plurality of key switches, and the user may control operation of the electric range by inputting a command to the control board 90 through the key switches. The control board 90 may be seated on a control board bracket 91 and the control board bracket 91 may be mounted on the first casing 110.

An upper surface of the control board 90 may be in close contact with a lower surface of the cover plate 20. The control board 90 may be disposed at a position corresponding to the input interface.

The control board 90 and the input interface may be connected to each other by, for example, a capacitive touch input method. Thus, when the user inputs a control command to the input interface, the control command may be input to the control board 90.

In a specific region of the upper surface of the cover plate 20, a display on which an operating state of the electric range may be displayed may be provided. More specifically, a light display region may be formed on the upper surface of the cover plate 20. A light source unit 95 may be disposed below the cover plate 20, and light emitted from the light source unit 95 may be transmitted to the user through the light display region. The light display region and the light source unit 95 may be disposed at positions corresponding to each other. When a plurality of light source units 95 is provided, a same number of light display regions may be provided on the upper surface of the cover plate 20.

A plurality of heating units 30 may be provided and disposed on a lower side of the cover plate 20 and may heat an object to be heated. Referring to FIGS. 3 and 4, the electric range may include first, second, and third heating units 30. The first heating unit 30 may be disposed on a first side of the electric range, that is, a right side thereof, and may be a high-power heating unit. The second and third heating units 30 may be disposed on a second side of the electric range, that is, a left side thereof, and may be low-power heating units. The second and third heating units 30 may be disposed adjacent to each other in a frontward-rearward direction at the left side of the electric range.

As described above, the heating units 30 may be implemented as induction heating-type heating units. According to another embodiment, some of the plurality of heating units 30 may be implemented as induction heating-type heating units, and the remaining of the heating units 30 may be implemented as resistance heating-type heating units. That is, an electric range according to another embodiment may be implemented as a highlight-type heating device or a hybrid-type electric range. Hereinafter, embodiments will be described with reference to an electric range in which all of the plurality of heating units 30 are provided as induction heating-type heating units.

A temperature sensor 60 may detect a temperature of the cover plate 20. The temperature detected by the temperature sensor 60 may be used to estimate a temperature of the heating unit 30. The temperature sensor 60 may be installed at a central portion of the heating unit 30. The temperature sensor 60 may be electrically connected to the printed circuit board 70, which is provided on a lower side of the upper bracket 40, through an electric wire.

The electric range may include a sensor bracket 61 for mounting the temperature sensor 60 on the central portion of the heating unit 30. The sensor bracket 61 may be mounted on the central portion of the heating unit 30, and the temperature sensor 60 may be mounted inside of the sensor bracket 61.

The heating unit 30 may be mounted on the upper bracket 40. According to the embodiment of FIGS. 3 and 4, two upper brackets 40 may be provided in the electric range. The upper bracket 40 provided on the first side of the electric range may support the high-power heating unit 30, and the upper bracket 40 provided on the second side of the electric range may support the low-power heating unit 30.

Of course, the number of the heating units 30 and the upper brackets 40 is not limited thereto. When the plurality of heating units 30 is provided, the upper brackets 40 configured to support the heating units 30 may also be provided in an arbitrary number as necessary.

The heating unit 30 may include the working coil 31 and a core frame 32, and a ferrite core may be installed on a lower surface of the core frame 32. The working coil 31 may be spirally wound on an upper surface of the core frame 32. When high-frequency power is applied to the working coil 31, a magnetic field may be formed around the ferrite core, and an eddy current may be formed on an object to be heated due to the formed magnetic field.

The upper bracket 40 may be disposed on a lower side of the heating unit 30 and may support the heating unit 30. The upper bracket 40 may be referred to as a "first bracket". The upper bracket 40 may be made of, for example, an aluminum material; however, embodiments are not limited thereto.

The upper bracket 40 may include a first upper plate 41 and a second upper plate 42. The first upper plate 41 may form a bottom surface of the upper bracket 40, and the heating unit 30 may be mounted on the first upper plate 41. The first upper plate 41 may be provided to cover the printed circuit board 70, which is provided therebelow, in the vertical direction. When a plurality of upper brackets 40 is provided, depending on an area of the printed circuit board 70, one first upper plate 41 may cover the printed circuit board 70 or a plurality of first upper plates 41 may be coupled to each other to cover the printed circuit board 70.

The first upper plate 41 may serve to shield an electromagnetic field and electromagnetic waves generated from the heating unit 30 from reaching the printed circuit board 70 and electronic elements installed in the printed circuit board 70. That is, the upper bracket 40 may serve to improve electromagnetic compatibility (EMC) and electromagnetic interference (EMI) of the printed circuit board 70.

The second upper plate 42 may be bent from the first upper plate 41. The second upper plate 42 may be bent in a vertical direction of the electric range. That is, the second upper plate 42 may be bent in the vertical direction from an edge of the first upper plate 41. The second upper plate 42 may be disposed on at least one side of the first upper plate 41 formed in a substantially quadrangular shape.

The second upper plate 42 may reinforce a rigidity of the entire upper bracket 40. That is, the second upper plate 42 may be formed to be bent from the first upper plate 41 to inhibit the plate-shaped first upper plate 41 from being bent or damaged due to a weight of the installed components including the heating unit 30 or external force.

The light source unit 95 may be disposed on the upper bracket 40. For example, the light source unit 95 may be provided on the printed circuit board 70 disposed on a lower side of the upper bracket 40, and an opening disposed at a position corresponding to the light source unit 95 may be formed in the upper bracket 40. As another embodiment, the light source unit 95 may be disposed on the bracket and may be electrically connected to the printed circuit board 70 therebelow. As described above, the light display region may be formed on a portion of the cover plate 20 corresponding to the light source unit 95.

The light source unit 95 may include, for example, a plurality of light-emitting diodes (LEDs) arranged in a line. When the heating unit 30 operates, the light source unit 95 may be turned on to notify the user of whether or not the heating unit 30 is operating. Alternatively, the light source unit 95 may also notify the user of an operation state of the electric range by changing a lighting form, or color, for example, of the plurality of LEDs.

A number of the light source units 95 may be appropriately selected according to a number of the heating units 30. In FIGS. 3 and 4, a shape in which three light source units 95 are provided for three heating units 30 is illustrated. However, the number of the light source units 95 is not limited thereto.

The base bracket 50 may be referred to as a "second bracket". The base bracket 50 may be disposed on the lower side of the upper bracket 40, and the printed circuit board 70 may be mounted on the base bracket 50.

The base bracket 50 may include bottom plates 51a and 51b (collectively referred to as a "bottom plate 51") and a side plate 52. The bottom plates 51a and 51b may form a bottom surface of the base bracket 50, and the printed circuit board 70 may be mounted on an upper surface of the partial bottom plate 51a. The boss unit 513 may be formed on another partial bottom plate 51b. The boss unit 513 may support the upper bracket 40 together with the third casing 130 described above.

The side plate 52 may be bent from the bottom plates 51a and 51b. The side plate 52 may be bent in the vertical direction of the electric range. The side plate 52 may be bent in the vertical direction from an edge of the bottom plate 51. The side plate 52 may be disposed at each side of the bottom plate 51 formed in a substantially quadrangular shape.

The side plate 52 may reinforce a rigidity of the entire base bracket 50. That is, the side plate 52 may be bent from the bottom plate 51 to inhibit the plate-shaped bottom plate 51 from being bent or damaged due to a weight of the installed components, such as the circuit board, or external force,

The printed circuit board 70 may constitute a control unit, may receive power from an external power source, and may communicate with an external device in a wired or wireless manner. The printed circuit board 70 may be electrically connected to the control board 90 and may receive commands, which are input by the user, from the control board 90. The printed circuit board 70 may be electrically connected to the light source unit 95 and the working coil 31 and may control operations thereof.

A plurality of electronic elements may be installed on the printed circuit board 70. The plurality of electronic elements may constitute a drive circuit unit (drive circuit). The drive circuit unit may serve to drive the heating unit 30.

A heat sink 71 may be mounted on the printed circuit board 70. The heat sink 71 may cool heat inside of the case 10, and in particular, may cool heat generated from some electronic elements installed on the printed circuit board 70. Further, the heat sink 71 may protect components accommodated in the case 10.

At least one heat dissipation member or fin may be formed on the heat sink 71. Cooling efficiency may be increased by the at least one heat dissipation member.

A blowing fan 80 may be mounted on the base bracket 50, and may serve to introduce outside air for cooling the case 10 into the case 10.

Referring to FIG. 4, a first through hole 511 may be formed in a specific region of the base bracket 50, for example, in a rear region thereof, and the blowing fan 80 may be installed above the first through hole 511. In addition, the first through hole 511 may be disposed above the first ventilator 111a. Accordingly, outside air may be introduced into the blowing fan 80 via the first ventilator 111a and the first through hole 511, and the air introduced into the blowing fan 80 may forcibly flow and may be discharged from an outlet of the blowing fan 80.

The air provided from the blowing fan 80 may flow to the printed circuit board 70. The blowing fan 80 may be spaced apart from the heat sink 71 by a specific separation distance, and a portion of the air discharged from the blowing fan 80 may be provided to the heat sink 71. A remaining portion of the air discharged from the blowing fan 80 may be provided to an outer region of the heat sink 71.

An air guide 85 may guide the air discharged from the blowing fan 80. The air guide 85 may be mounted on the printed circuit board 70 so as to surround the heat sink 71. Accordingly, the air guide 85 may transmit the air, which is discharged from the blowing fan 80, to the heat sink 71.

A first side of the air guide 85, for example, a rear side thereof, may be connected to the outlet of the blowing fan 80, and a second side of the air guide 85, for example, a front side thereof, may be connected to a front side of the base bracket 50. A second through hole 512 may be formed in the front side of the base bracket 50, and the second through hole 512 may be disposed above the second ventilator 111b. Accordingly, the air that has cooled the heat sink 71 may flow toward the second side of the air guide 85 and then may be discharged to the outside of the case 10 via the second through hole 512 and the second ventilator 111b.

Hereinafter, a shape of the heating unit 30 supported by the upper bracket 40 will be described.

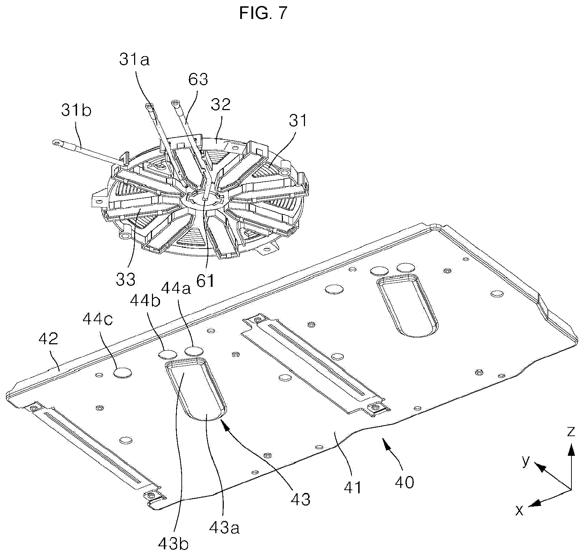

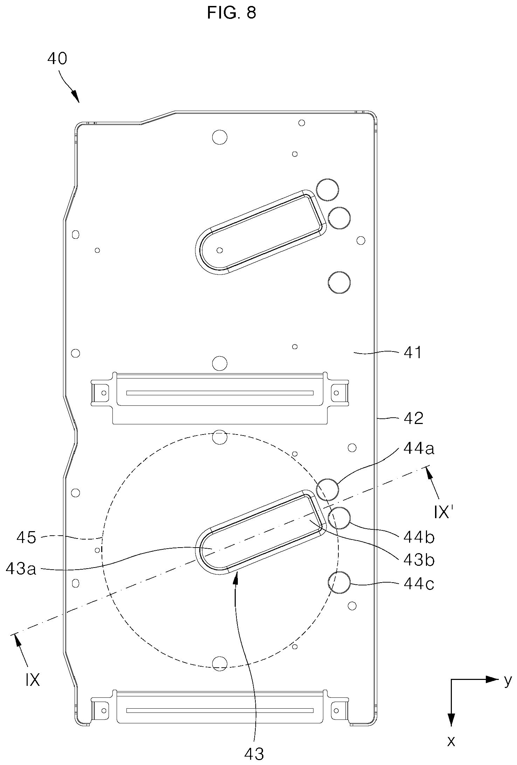

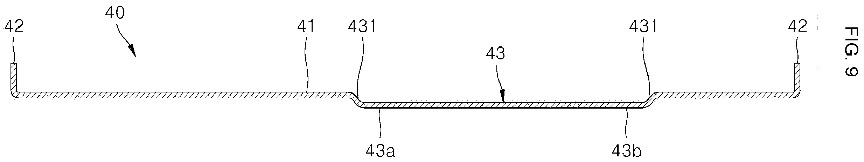

FIG. 6 is a perspective view of the heating unit 30 and the upper bracket 40 viewed from above, according to an embodiment. FIG. 7 is a perspective view of the heating unit 30 and the upper bracket 40 viewed from below, according to an embodiment. FIG. 8 is a plan view of the upper bracket 40 according to an embodiment. FIG. 9 is a cross-sectional view, taken along line IX-IX' in FIG. 8.

In particular, FIGS. 6 and 7 illustrate an example in which a front left heating unit, that is, the second heating unit 30 is mounted on a left upper bracket 40. In FIGS. 6 and 7, a rear left heating unit, that is, the third heating unit 30 is not illustrated in order to more clearly describe a coupling structure between the heating unit 30 and the upper bracket 40. However, as the structure in which the rear left heating unit 30 is coupled to the left upper bracket 40 is illustrated in FIGS. 3 and 4, it is not difficult to understand embodiments. In addition, the coupling structure between the heating unit 30 and the upper bracket 40 illustrated in FIGS. 6 to 9 may be equally applied to the embodiment in which a right heating unit, that is, the first heating unit 30 is coupled to a right upper bracket 40.

First, a structure of the heating unit 30 will be described hereinafter.

Referring to FIGS. 6 and 7, the heating unit 30 may include the working coil 31, the core frame 32, and a ferrite core 33. The core frame 32 may form an entire shape of the heating unit 30. The working coil 31 may be spirally wound on an upper surface of the core frame 32. The ferrite core 33 may be mounted on a lower surface of the core frame 32. Accordingly, when high-frequency power is applied to the working coil 31, a magnetic field may be formed around the ferrite core 33, and the formed magnetic field may form an eddy current in an object to be heated to generate heat.

After being spirally wound on the core frame 32, the working coil 31 may be pulled out from an edge portion of the core frame 32 to the outside of the core frame 32. The working coil 31 may include a first side 31a and a second side 31b. The first side 31a of the working coil 31 may be a portion of the working coil 31 inserted into the core frame 32. The second side 31b of the working coil 31 may be a portion of the working coil 31 pulled out from the core frame 32. The first and second sides 31a and 31b of the working coil 31 may be disposed adjacent to an edge of the core frame 32 at a lower portion of the core frame 32.

The first side 31a and the second side 31b of the working coil 31 may be electrically connected to the printed circuit board 70 provided on the lower side of the upper bracket 40. The first side 31a and the second side 31b of the working coil 31 may be electrically connected to the printed circuit board 70 through the upper bracket 40.

The electric range may include the temperature sensor 60 mounted on the central portion of the core frame 32. That is, a mounting hole 321 in which the temperature sensor 60 may be mounted may be formed in the central portion of the core frame 32, and the temperature sensor 60 may be mounted in the mounting hole 321.

The temperature sensor 60 may be electrically connected to the printed circuit board 70 provided on the lower side of the upper bracket 40 through an electric wire 63. The electric wire 63 of the temperature sensor 60 may be electrically connected to the printed circuit board 70 through the upper bracket 40. A partial electric wire of the electric wire 63 of the temperature sensor 60 may be disposed on a lower side of the core frame 32, and an extension electric wire connected to a first side of the partial electric wire may be disposed adjacent to the edge of the core frame 32 at the lower portion of the core frame 32 and may be electrically connected to the printed circuit board 70 through the upper bracket 40.

The electric range may include the sensor bracket 61 for mounting the temperature sensor 60 on the core frame 32. The sensor bracket 61 may be detachably mounted in the mounting hole 321 formed in the central portion of the core frame 32, and the temperature sensor 60 may be mounted inside of the sensor bracket 61. Although not shown in the drawings, a fuse may be mounted in the sensor bracket 61.

The temperature sensor 60 may detect a temperature of the cover plate 20 while the electric range is being operated, and a temperature of the heating unit 30 may be estimated on the basis of the detected temperature. Heat generated in the heating unit 30 may adversely affect the printed circuit board 70, which is disposed on the lower side of the heating unit 30, and various electronic elements installed on the printed circuit board 70, as well as the heating unit 30. Accordingly, when the temperature of the heating unit 30 exceeds a set critical temperature, the control unit may take necessary actions, such as stopping operation of the electric range or controlling the blowing fan 80 to increase a cooling capacity.

A plurality of coupling units for coupling with the upper bracket 40 may be formed on an edge of the core frame 32. The plurality of coupling units may be radially disposed on the edge of the core frame 32 to be spaced apart from each other in a circumferential direction. The plurality of coupling units may be, for example, screw-coupled with the upper bracket 40.

Next, a structure of the upper bracket 40 will be described hereinafter.

The upper bracket 40 may be disposed on the lower side of the heating unit 30 and may support the heating unit 30. The upper bracket 40 may include the first upper plate 41 and the second upper plate 42.

The first upper plate 41 may form the bottom surface of the upper bracket 40. The first upper plate 41 may cover the printed circuit board 70, which is provided therebelow, in the vertical direction. At least one side edge of the first upper plate 41 may be seated on the third casing 130 and may be coupled to the third casing 130 through a screw for example.

The second upper plate 42 may be bent upward with respect to the electric range from at least one side edge of the first upper plate 41. For example, the second upper plate 42 may be formed on each of a left side edge, a right side edge, and a rear side edge of the first upper plate 41. The second upper plate 42 may be bent downward with respect to the electric range from at least one side edge of the first upper plate 41.

In particular, referring to FIG. 8, the first upper plate 41 may include a first region 45. The first region 45 of the first upper plate 41 may be a specific region of the first upper plate 41 corresponding to a position of the heating unit 30. Accordingly, the heating unit 30 may be mounted above the first region 45 of the first upper plate 41. That is, the edge of the core frame 32 forming the heating unit 30 may correspond to a boundary of the first region 45 of the first upper plate 41.

The first region 45 of the first upper plate 41 may have a same shape as the heating unit 30, that is, the core frame 32. More accurately, a boundary of the first region 45 of the first upper plate 41 may have a same shape as the edge of the core frame 32. For example, referring to the drawings, as the edge of the core frame 32 has a circular shape, the boundary of the first region 45 of the first upper plate 41 may also have a circular shape.

A recessed portion or recess 43 may be formed in the upper bracket 40. That is, the recessed portion 43 may be formed in the first upper plate 41 among the first upper plate 41 and the second upper plate 42 forming the upper bracket 40. An insertion hole may not be formed in the recessed portion 43. Thus, EMC and EMI may be improved.

In particular, referring to FIG. 8, the recessed portion 43 may be formed on an inner side of the first region 45 of the first upper plate 41. However, embodiments are not limited thereto. Although not shown in the drawings, according to another embodiment, a portion of the recessed portion 43 may be formed on an inner side of the first region 45 of the first upper plate 41, and a remaining portion of the recessed portion 43 may be formed on an outer side of the first region 45 of the first upper plate 41. That is, at least a portion of the recessed portion 43 may be formed on the inner side of the first region 45 of the first upper plate 41. Hereinafter, for convenience of description, this embodiment will be described on the basis of the shape in which the entire recessed portion 43 is formed on the inner side of the first region 45 of the first upper plate 41.

The recessed portion 43 may be recessed downwardly from the first upper plate 41. For example, the recessed portion 43 may be formed by being extruded from above the first upper plate 41.

In particular, referring to FIG. 9, an edge 431 of the recessed portion 43 may be bent upward. The bent edge 431 of the recessed portion 43 may be connected to the first upper plate 41. Due to the bent edge 431 of the recessed portion 43, a rigidity of the upper bracket 40 may be reinforced.

The recessed portion 43 may extend in a direction corresponding to a widthwise direction of the core frame 32. As the core frame 32 has a circular shape, the widthwise direction of the core frame 32 may be a radial direction of the circle. That is, the recessed portion 43 may extend in a direction corresponding to a radial direction of the core frame 32.

The recessed portion 43 may include first and second sides 43a and 43b. The first side 43a and the second side 43b of the recessed portion 43 may be connected to each other.

The first side 43a of the recessed portion 43 may be formed at a position of the first upper plate 41 corresponding to the central portion of the core frame 32. That is, the first side 43a of the recessed portion 43 may be formed in a central region of the first region 45 of the first upper plate 41.

In this case, as described above, the sensor bracket 61 may be detachably mounted in the mounting hole 321 formed in the central portion of the core frame 32. The sensor bracket 61 and the first side 43a of the recessed portion 43 should be mounted so as not to interfere with each other.

Thus, in order to prevent interference between the sensor bracket 61 and the recessed portion 43, the first side 43a of the recessed portion 43 may have a shape corresponding to a lower portion of the sensor bracket 61. That is, the first side 43a of the recessed portion 43 formed at a position corresponding to a mounting position of the sensor bracket 61 may have a shape that does not interfere with the sensor bracket 61. For example, as the lower portion of the sensor bracket 61 has a circular shape, the first side 43a of the recessed portion 43 may have a shape corresponding to a portion of the circular shape.

The second side 43b of the recessed portion 43 may be formed at a position corresponding to the edge of the core frame 32. That is, the second side 43b of the recessed portion 43 may be formed adjacent to an edge region of the first region 45 of the first upper plate 41. The second side 43b of the recessed portion 43 may have a quadrangular shape.

In summary, the recessed portion 43 may be formed by being recessed in a substantially quadrangular shape, and a portion of the recessed portion 43 may have a shape corresponding to the central portion of the heating unit 30. In addition, an insertion hole may not be formed in the recessed portion 43.

A plurality of insertion holes 44a, 44b, and 44c may be formed in the upper bracket 40. The plurality of insertion holes 44a, 44b, and 44c may serve to penetrate the working coil 31 and the electric wire positioned on an upper side of the first upper plate 41 to a lower side of the first upper plate 41.

First insertion hole 44a may be formed in the first upper plate 41 to penetrate or insert the electric wire 63 of the temperature sensor 60 mounted on the heating unit 30 into the lower side of the first upper plate 41. The electric wire 63 of the temperature sensor 60 penetrating to the lower side of the first upper plate 41 may be electrically connected to the printed circuit board 70 disposed on the lower side of the upper bracket 40 through the first insertion hole 44a.

Second and third insertion holes 44b and 44c may be formed in the first upper plate 41 to penetrate or insert the first and second sides 31a and 31b of the working coil 31, which is wound around the core frame 32, into the lower side of the first upper plate 41. The second insertion hole 44b may be formed in the first upper plate 41 to penetrate or insert the first side 31a of the working coil 31 into the lower side of the first upper plate 41. The third insertion hole 44c may be formed in the first upper plate 41 to penetrate or insert the second side 31b of the working coil 31 into the lower side of the first upper plate 41. The first and second sides 31a and 31b of the working coil 31 penetrating to the lower side of the first upper plate 41 may be electrically connected to the printed circuit board 70 disposed on the lower side of the upper bracket 40 through the second and third insertion holes 44b and 44c, respectively.

The plurality of insertion holes 44a, 44b, and 44c may be formed radially with respect to a center of the first region 45 of the first upper plate 41. The first insertion hole 44a and the second insertion hole 44b may be formed adjacent to each other, and the third insertion hole 44c may be formed slightly apart from the first and second insertion holes 44a and 44b.

In particular, referring to FIGS. 3 and 8, the plurality of insertion holes 44a, 44b, and 44c may partially overlap the first region 45 of the first upper plate 41. That is, the plurality of insertion holes 44a, 44b, and 44c may partially overlap the heating unit 30, that is, the edge of the core frame 32. However, embodiments are not limited thereto.

According to another embodiment, the plurality of insertion holes 44a, 44b, and 44c may be formed on an outer side of the first region 45 of the first upper plate 41 and may also be formed on an inner side of the first region 45 of the first upper plate 41. In order to improve EMC and EMI of the electric range, the plurality of insertion holes 44a, 44b, and 44c may partially overlap the first region 45 of the first upper plate 41 or may be formed on the outer side of the first region 45 of the first upper plate 41.

The plurality of insertion holes 44a, 44b, and 44c may be spaced apart from the recessed portion 43. That is, the plurality of insertion holes 44a, 44b, and 44c may be spaced apart from the second side 43b of the recessed portion 43 by a specific separation distance. However, embodiments are not limited thereto. According to another embodiment, the plurality of insertion holes 44a, 44b, and 44c may be formed by being connected to the recessed portion 43, that is, the second side 43b of the recessed portion 43.

The first region 45, the recessed portion 43, and the plurality of insertion holes 44a, 44b, and 44c of the first upper plate 41, which are described above, are formed on a front side of the first upper plate 41. In this case, in order to mount the rear left heating unit 30, the first region 45, the recessed portion 43, and the plurality of insertion holes 44a, 44b, and 44c of the first upper plate 41 may also be formed on a rear side of the first upper plate 41. In addition, in order to couple the right heating unit 30 to the first upper plate 41 disposed on a right side, the contents described above may be equally applied.

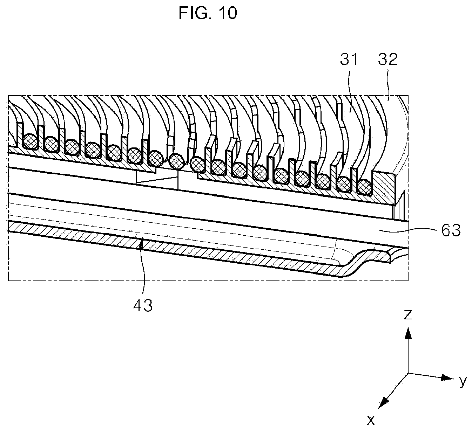

Hereinafter, a coupling structure between the heating unit 30 and the upper bracket 40 will be described with reference to FIG. 10.

FIG. 10 is a perspective view related to the heating unit 30 being mounted to the upper bracket 40, according to an embodiment. The heating unit 30 may be disposed in the first region 45 of the first upper plate 41. In addition, a partial electric wire of the electric wire of the temperature sensor 60 mounted on the central portion of the heating unit 30 may be disposed on the heating unit 30 and the first upper plate 41, and an extension electric wire connected to the partial electric wire may be electrically connected to the printed circuit board 70 through the first insertion hole 44a of the first upper plate 41. The recessed portion 43 may be formed in the first upper plate 41 corresponding to a lower side of the partial electric wire. Accordingly, interference between the partial electric wire and the heating unit 30 may be prevented due to the recessed portion 43.

More specifically, an electric range in which the recessed portion 43 is not formed in the first upper plate 41 is assumed. In this case, a manufacturer of the electric range places the partial electric wire in a partially empty space of the heating unit 30.

However, when the heating unit 30 is mounted, the partial electric wire may be withdrawn from the partially empty space and may be disposed on a close contact portion between the heating unit 30 and the first upper plate 41. That is, the partial electric wire may interfere with the heating unit 30 and the first upper plate 41.

Accordingly, the manufacturer should mount the heating unit 30 again. Alternatively, when the above-described interference state is not recognized by the manufacturer, pressure may be applied to the partial electric wire due to the weight of the heating unit 30 for example, and the electric wire may be disconnected. When the electric wire is disconnected, the electric range may not function normally and an operation error may occur. In addition, when the electric wire is disconnected, a fire accident may occur.

In order to solve the above-described problems, according to embodiments disclosed herein, the recessed portion 43 is formed in the first region 45 of the first upper plate 41 in which the heating unit 30 is mounted. Thus, when the partial electric wire is withdrawn from the partially empty space, the partial electric wire may be accommodated in the recessed portion 43. Accordingly, interference between the partial electric wire and the heating unit 30 may be prevented based on the recessed portion 43.

Although not shown in the drawings, the recessed portion 43 may accommodate not only the electric wire 63 of the temperature sensor 60, but also a portion of the working coil 31, which is disposed below the heating unit 30 and connected to the first side 31a of the working coil 31. That is, as the portion of the working coil 31 may also be separated from the heating unit 30, the recessed portion 43 may prevent interference between the heating unit 30 and the portion of the working coil 31, similar to the portion of the electric wire 63 of the temperature sensor 60.

In summary, the electric range according to an embodiment may be formed by forming on a portion of the upper bracket 40, which is configured to support the heating unit 30, downward. The portion of the electric wire 63 of the temperature sensor 60 may be disposed or accommodated in the portion of the upper bracket 40 which is downwardly formed. Accordingly, interference between the portion of the electric wire 63 and the heating unit 30 may be prevented. Further, an operation error of the electric range may be prevented, and the occurrence of a fire accident may be suppressed.

In addition, according to an embodiment, the edge 431 of the recessed portion 43 may be bent upward and connected to the upper bracket 40. Accordingly, a rigidity of the upper bracket 40 may be reinforced due to the bent edge 431 of the recessed portion 43, and a downward deflection of the upper bracket 40 may be reduced.

In addition, according to an embodiment, an insertion hole may not be formed in the recessed portion 43. Accordingly, it is possible to minimize an electromagnetic field and electromagnetic waves generated by the heating unit 30 from propagating to the printed circuit board 70, and EMC and EMI may be improved.

Embodiments disclosed herein provide an electric range allowing interference of an electric wire disposed between a heating unit and a bracket to be prevented. Embodiments disclosed herein further provide an electric range allowing electromagnetic compatibility (EMC) and electromagnetic interference (EMI) to be improved.

Embodiments disclosed herein provide an electric range allowing a strength of an upper bracket configured to support a heating unit to be reinforced. Embodiments disclosed herein also provide an electric range allowing the convenience of a manufacturer when a heating unit is mounted to be improved.

Advantages not limited to the above-described advantages, and other advantages will be understood by the description and will be more definitely understood through the embodiments.

An electric range according to an embodiment may be downwardly formed from a portion of a bracket, which is configured to support a heating unit. Accordingly, interference between an electric wire, which is disposed between the heating unit and the bracket, and the heating unit may be prevented.

More specifically, the heating unit may be mounted on a specific region on the bracket, and a recessed portion which is downwardly formed may be formed in a portion of the specific region. Accordingly, the electric wire disposed between the heating unit and the bracket may be accommodated or disposed in the recessed portion, and accordingly, an interference phenomenon of the electric wire may be minimized.

Further, according to an embodiment, an edge of the recessed portion may be bent upward and connected to the bracket configured to support the heating unit. Accordingly, a rigidity of the bracket may be reinforced due to the bent edge of the recessed portion.

Furthermore, according to an embodiment, in the heating unit, an insertion hole may not be formed in a specific region on the bracket. Accordingly, it is possible to minimize an electromagnetic field and electromagnetic waves generated and propagated by the heating unit to a circuit board.

An electric range according to an embodiment may include a case, a cover plate coupled to an upper end of the case and having an upper surface on which an object to be heated is disposed, a heating unit disposed below the cover plate and configured to heat the object to be heated, and a first bracket disposed below the heating unit and configured to support the heating unit. A first electric wire may be disposed between the heating unit and the first bracket, a recessed portion may be formed in the first bracket, and the recessed portion may prevent the first electric wire from interfering with the heating unit.

The heating unit may include a core frame mounted to a first region on the first bracket, and at least a portion of the recessed portion may be formed on an inner side of the first region of the first bracket. The recessed portion may be formed to extend in a direction corresponding to a lateral direction of the core frame. A first side of the recessed portion may be formed at a position of the first bracket corresponding to a central portion of the core frame, and a second side of the recessed portion may be formed at a position of the first bracket corresponding to an edge of the core frame.

The electric range may further include a sensor mounted on the heating unit. The first electric wire may be a portion of an electric wire electrically connected to the sensor.

The electric range may further include a sensor bracket configured to mount the sensor on the core frame. In this case, the sensor bracket may be detachably mounted on a portion of the core frame, and a portion of the recessed portion formed at a position corresponding to a mounting position of the sensor bracket may have a shape that does not interfere with the sensor bracket.

An insertion hole may be further formed in the first bracket. An electric wire extending from the first electric wire toward a first side may pass through the insertion hole and may be disposed below the first bracket. The insertion hole may be formed to be spaced apart from the recessed portion, and the insertion hole may be formed to partially overlap an edge of the heating unit. Further, an edge of the recessed portion may be bent upward and connected to the first bracket.

An electric range according to another embodiment may include a case, a cover plate coupled to an upper end of the case, a heating unit disposed below the cover plate, a sensor mounted on the heating unit, a first bracket configured to support the heating unit and in which a recessed portion and a passing-through portion are formed, and a second bracket disposed below the first bracket and on which a circuit board is mounted. The sensor and the circuit board may be electrically connected to each other by an electric wire, a first electric wire of the electric wire, which is disposed between the heating unit and the first bracket, may be disposed in the recessed portion, and an electric wire extending from the first electric wire of the electric wire may be electrically connected to the circuit board through the passing-through portion.

According to embodiments disclosed herein, interference between an electric wire disposed between a heating unit and a bracket and the heating unit is minimized, so that an operation error of the electric range may be prevented, and the occurrence of a fire accident may be suppressed. Further, according to embodiments disclosed herein, a rigidity of the bracket is reinforced due to a bent edge of the bracket, so that a downward deflection of the bracket can be reduced. Furthermore, according to embodiments disclosed herein, it is possible to minimize an electromagnetic field and electromagnetic waves generated and propagated from the heating unit to the circuit board, so that EMC and EMI may be improved. Also, according to embodiments disclosed herein, a recessed portion is formed in a portion of the bracket configured to support the heating unit, so that convenience of a manufacturer when the heating unit is mounted may be improved.

In addition to the above-described advantages, specific advantages of embodiments are described together with the description for implementing the embodiments.

As described above, although embodiments have been described with reference to specific matters such as detailed components, limited embodiments, and accompanying drawings, those skilled in the art may apparently understand that they are provided only for the illustrative purpose, but the embodiments are not limited thereto. In addition, those skilled in the art will recognize that various substitutes and modifications may be made without departing from the scope of the present invention. Accordingly, the technical scope is not limited to the described embodiments, but defined by claims hereinafter, equivalents, and modifications of equivalents.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section could be termed a second element, component, region, layer or section without departing from the teachings of the present invention.

Spatially relative terms, such as "lower", "upper" for example,, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "lower" relative to other elements or features would then be oriented "upper" relative to the other elements or features. Thus, the exemplary term "lower" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments are described herein with reference to cross-section illustrations that are schematic illustrations of idealized embodiments (and intermediate structures). As such, variations from the shapes of the illustrations as a result, for example, of manufacturing techniques and/or tolerances, are to be expected. Thus, embodiments should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Any reference in this specification to "one embodiment," "an embodiment," "example embodiment," etc., means that a particular feature, structure, or characteristic described in connection with the embodiment is included in at least one embodiment. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

## Claims

1. An electric range, comprising:
a case (10);
a cover plate (20) coupled to an upper side of the case (10) and having an upper surface on which an object can be disposed;
at least one heating unit (30) disposed below the cover plate (20) and configured to heat the object to be heated; and
a first bracket (40) disposed below the at least one heating unit (30) and configured to support the at least one heating unit (30),
wherein a first electric wire (31a, 63) connected to the at least one heating unit (30) or an electrical component of the electric range is disposed between the at least one heating unit (30) and the first bracket (40),
a recessed portion (43) is formed in the first bracket (40), and
the first electric wire (31a, 63) is disposed at least partially in the recessed portion (43) such that the recessed portion (43) prevents the first electric wire (31a, 63) from interfering with the at least one heating unit (30).

2. The electric range of claim 1, wherein the at least one heating unit (30) includes a core frame (32) mounted in a first region on the first bracket (40), and at least a portion of the recessed portion (43) is formed on an inner side of the first region of the first bracket (40).

3. The electric range of claim 2, wherein the recessed portion (43) extends in a direction crossing the core frame (32).

4. The electric range of claim 2 or 3, wherein a first side of the recessed portion (43) is formed at a position of the first bracket (40) corresponding to a central portion of the core frame (32), and a second side of the recessed portion (43) is formed at a position of the first bracket (40) corresponding to an edge of the core frame (32).

5. The electric range of any one of claims 2 to 4, wherein a boundary of the first region of the first bracket (40) has a same shape as an edge of the core frame (32).

6. The electric range of any one of claims 1 to 5, further comprising a sensor (60) mounted on the at least one heating unit (30), wherein the first electric wire (63) is a portion of an electric wire electrically connected to the sensor (60).

7. The electric range of claim 6, further comprising a sensor bracket (61) configured to mount the sensor (60) on the core frame (32), wherein the sensor bracket (61) is detachably mounted on the core frame (32), and a portion of the recessed portion (43) formed at a position corresponding to the mounting position of the sensor bracket (61) has a shape that does not allow interference between the sensor bracket (61) and the recessed portion (43).

8. The electric range of any one of claims 1 to 7, wherein an insertion hole (44a, 44b, 44c) is formed in the first bracket (40), and an electric wire extending from the first electric wire passes through the insertion hole (44a, 44b, 44c) and is disposed below the first bracket (40).

9. The electric range of claim 8, wherein the insertion hole (44a, 44b, 44c) is spaced apart from the recessed portion (43).

10. The electric range of claim 8 or 9, wherein the insertion hole (44a, 44b, 44c) at least partially overlaps an edge of the at least one heating unit (30).

11. The electric range of claim 8, wherein the insertion hole (44a, 44b, 44c) is connected to the recessed portion (43).

12. The electric range of any one of claims 8 to 11, further comprising a second bracket (50) disposed below the first bracket (40) and on which a circuit board is mounted, wherein the electric wire extending from the first electric wire is electrically connected to the circuit board (70).

13. The electric range of any one of claims 1 to 5, wherein the at least one heating unit (30) includes a working coil (31), and wherein the first electric wire is a portion of the working coil (31).

14. The electric range of any one of claims 1 to 13, wherein the first bracket (40) includes a first plate (41) forming a bottom surface of the first bracket (40) and a second plate (42) bent upward or downward from an edge of the first plate (40), wherein the recessed portion (43) is formed in a first region of the first plate (41), and wherein the at least one heating unit (30) is mounted above the first region of the first plate (41).
